**Europäisches Patentamt**

**European Patent Office**

**Office européen des brevets**

(19)

(11) Veröffentlichungsnummer: **0 238 921**
**B1**

(12) ## EUROPÄISCHE PATENTSCHRIFT

(45) Veröffentlichungstag der Patentschrift:
25.10.89

(51) Int. Cl.⁴: **F16H 57/08**

(21) Anmeldenummer: **87103335.3**

(22) Anmeldetag: **09.03.87**

(54) In den Umlaufträger eines Planetengetriebes einsetzbarer Planetenradbolzen.

(30) Priorität: **26.03.86 DE 3610211**

(43) Veröffentlichungstag der Anmeldung:
**30.09.87 Patentblatt 87/40**

(45) Bekanntmachung des Hinweises auf die Patenterteilung:
**25.10.89 Patentblatt 89/43**

(84) Benannte Vertragsstaaten:
**AT CH DE FR GB IT LI**

(56) Entgegenhaltungen:
**CH-A- 543 676**
**US-A- 1 613 523**
**US-A- 3 974 718**

(73) Patentinhaber: **Wittenstein, Manfred, Dipl.-Ing.,**
**Bismarckstrasse 19, D-6991 Igersheim(DE)**

(72) Erfinder: **Wittenstein, Manfred, Dipl.-Ing.,**
**Bismarckstrasse 19, D-6991 Igersheim(DE)**
Erfinder: **Orlowski, Bernhard, Dipl.-Ing., Feuerbacher**
**Talstrasse 121, D-7000 Stuttgart 30(DE)**

(74) Vertreter: **Pfusch, Volker, Dipl.-Ing., Dinkelsbühler**
**Strasse 12F, D-7000 Stuttgart 50(DE)**

## Beschreibung

Die Erfindung betrifft einen in den Umlaufträger eines Planetengetriebes einsetzbaren Planetenradbolzen.

Es ist ganz allgemein bekannt, derartige Planetenradbolzen in dem Umlaufträger so zu lagern und zu fixieren, daß der mit dem Planetenradbolzen bestückte Umlaufträger axial einen möglichst geringen Bauraum beansprucht. Zu diesem Zweck werden die Bolzen bisher beispielsweise in die Aufnahmebohrungen des Umlaufträgers eingeschrumpft. Ein derartiges Schrumpfen erfordert nach allgemeinem Wissen der Fachleute allerdings, insbesondere in Fällen, in denen die Planetenradbolzen an beiden Enden gelagert sind, komplizierte und aufwendige Fertigungsanlagen. Denn einerseits muß der Umlaufträger erhitzt und die Bolzen stark unterkühlt werden, um die Bolzen in die Aufnahmebohrungen einbringen zu können.

Andererseits müssen beim Einschieben auch noch die axial zwischen den Bohrungen des Umlaufträgers zu lagernden Planetenränder erfaßt werden. Das durch Erhitzen des Umlaufträgers und Unterkühlen der Planetenradbolzen gewonnene Einbauspiel reicht nur Sekunden aus, in denen sowohl das Einfädeln der Planetenränder als auch das Einführen der Bolzen in die jeweils zweiten Aufnahmebohrungen beendigt sein muß, um ein vorzeitiges Steckenbleiben der Bolzen sicher zu vermeiden. Dies ist nur mit aufwendigen Spezialwerkzeugen möglich. Zudem können bei eingeschrumpften Bolzen die Planetenränder nur mit recht hohem Aufwand ausgetauscht werden, was ebenfalls allgemein bekannt ist.

Hier eine Verbesserung bei axial gleichbleibend geringem Platzbedarf zu schaffen, ist die Aufgabe der Erfindung. Dabei wird zudem angestrebt, die Fixierung der Planetenradbolzen so auszubilden, daß der Ein- und Ausbau ohne spezielle Fertigungseinrichtungen mit einfachen Werkzeugen, wie z.B. mit einem Schrauben- oder Sechskantschlüssel, erfolgen kann.

Gelöst wird diese Aufgabe durch eine Ausführung des Planetenradbolzens nach den kennzeichnenden Merkmalen des Anspruchs 1.

Wellenaufweitungen mit Hilfe konischer Einsatzkörper in entsprechend konisch geformten Wellenaufnahmebohrungen sind in der Technik in anderen Ausführungsformen auf anderen Anwendungsgebieten an sich bekannt. Keine dieser bekannten Ausführungen ist jedoch auf den vorliegenden Fall übertragbar.

So befaßt sich beispielsweise die CH-A 543 676 mit der Aufbringung von Nocken auf eine Nockenwelle. Dabei wird der zwischen Nocken und Welle zu erzielende Klemmsitz ausschließlich durch eine Überdeckung des Wellen- und Nockenbohrungsdurchmessers erzielt, wobei in dem Überdeckungsbereich sowohl der Wellenumfang als auch die Nockenbohrung zylindrisch sind. Die dortige mittels des in die Welle einschiebbaren Konus erfolgende Wellenaufweitung ist lediglich als Montagehilfe zum Einfädeln der Nocken auf die Welle gedacht, um die aufgezogenen Nocken sodann über eine gleichmäßige zylindrische Wellenoberfläche durch eine die Überdeckung zeitweise aufhebende hydraulische Aufweitung der Nockenbohrung an die endgültige Stelle verschieben zu können. Im Gegensatz zur vorliegenden Erfindung hat dort die konische Aufweitung nicht den Zweck, eine endgültige Verbindung eines Bolzens in einer Aufnahmebohrung zu schaffen. Darüber hinaus ist dort zum Einbringen des Konus eine zusätzliche Schraube erforderlich, die durch das Konusteil hindurchgeführt werden muß. Dadurch muß der Durchmesser des Konusteiles immer größer als der Mindestdurchmesser der Schraube sein, was der Verwirklichung einer möglichst kompakten Bauweise, wie sie bei der Befestigung von Planetenradbolzen in der Regel gefordert ist, entgegensteht. Weiterhin muß dort die Schraube immer mit ihrem Kopf aus dem Konusteil herausragen, wodurch die axiale Baulänge, die bei Planetengetrieben möglichst klein sein soll, nachteilig beeinflußt wird. Durch das Hindurchführen einer getrennten Schraube durch das Konusteil hindurch besitzt das Schraubengewinde nur einen sehr geringen Durchmesser, wenn der Außendurchmesser des Konusteiles durch den Planetenradbolzen, in den es einzusetzen ist, auf einen kleinen Durchmesser beschränkt ist. Damit ist die in CH-A 543 676 beschriebene Montagehilfsvorrichtung in mehrfacher Hinsicht nicht mit der vorliegenden Erfindung vergleichbar.

Bei einem Notverschluß für Rohrleitungen nach US-A 1 613 523, bei dem das aufzuweitende Teil aus umfangsmäßig getrennten Einzelelementen besteht, ist das Konusteil ebenfalls nicht direkt in das den Konus aufnehmende Teil einschraubbar. Es ist vielmehr auch dort eine zusätzliche Mutter, die aus dem aufnehmenden Teil herausragt, notwendig. Damit ist auch dort die axiale Länge der Konusverbindung größer als notwendig bzw. als für eine axial optimal kurze Planetengetriebeausbildung zulässig.

Die erfindungsgemäße Planetenradbefestigung ist dagegen bei konstruktiv kompaktem aufbau einfach betätigbar und von ihrer Funktion her absolut sicher. Die axiale Fixierung des Planetenradbolzens wird durch die mit einfachsten Mitteln sicher erzielbare radiale Verspannung des Volzens an einem seiner Enden in der betreffenden Aufnahmebohrung des Umlaufträgers erreicht. Die Verspannung kommt deshalb so einfach und sicher zustande, weil durch die konischen Gegenflächen der Planetenradbolzen-Öffnung und des in diese einzuführenden Kopfstückes die Aufweitung der Bolzenaußenfläche mit Hilfe des über ein Gewinde einschraubbaren Kopfstückes erzielt werden kann. Selbstverständlich ist die Bolzenwanddicke in dem Bereich der konischen Öffnung so festzulegen, daß durch Einschrauben des Kopfstückes auch tatsächlich die erforderliche Aufweitung eintreten kann.

Um das Kopfstück in dem Planetenradbolzen einfach spannen zu können, ist es mit einem angeformten Gewindebolzen versehen und besitzt außerdem einen Innensechskant, an dem ein Spannwerkzeug angesetzt werden kann. Das Vorsehen eines Innensechskantes ermöglicht die angestrebte axial kurze

Baulänge. Durch das in dem Planetenradbolzen selbst eingebrachte Gegengewinde für den Gewindebolzen des Kopfstückes wird die axiale Baulänge nochmals verkürzt.

Um den Planetenradbolzen bei der Montage des Kopfstückes gegen Verdrehen gut sichern zu können, wird an dem der konischen Öffnung des Planetenradbolzens gegenüberliegenden Ende nach Anspruch 2 ebenfalls ein Innensechskant angebracht.

Bei der erfindungsgemäßen Ausbildung des Planetenradbolzens ist es besonders vorteilhaft, den Bolzen durchgehend hohl zu gestalten.

Ist der Planetenradträger in dem Ulaufträger an seinen bieden Enden gelagert, ist das nur einseitig vorgesehene radiale Verspannen in dem Ulaufträger in derjenigen Lagerbohrung des Umlaufträgers vorzunehmen, die in dem steiferen Bereich des Umlaufträgers liegt. Der Grund hierfür liegt darin, daß ein Bolzen immer bestrebt ist, in derjenigen Richtung aus einer Bohrung herauszuwandern, in der eine bzw. die größere Radialkraft auf den Bolzen einwirkt (sogenannter Pfahleffekt, nach dem ein Pfahl bei radial auf das freie Ende ausgeübter Kraft stets aus dem Erdboden herauswandert). Bei Umlaufträgern von Planetengetrieben, in denen die Planetenradbolzen an beiden Enden gelagert sind, ist die höhere Steifigkeit immer dort gegeben, wo der Umlaufträger gemäß Anspruch 4 direkt in die an den Umlaufträger angebundene Welle übergeht.

Es ist auch möglich, die Planetenradbolzen nur einseitig in dem Umlaufträger zu lagern. In diesen Fällen muß an dem freien Ende des Planetenradbolzens ein Anschlag für das auf dem Planetenradbolzen laufende Planetenrad vorgesehen sein. Zweckmäßige Ausgestaltungen hierfür geben die Ansprüche 7 bis 9 wieder. Die vorgesehene Ringschulter kann danach beispielsweise eine auf die Stirnseite des Planetenradbolzens aufgebrachte Ringscheibe sein, die entweder mit einem Gewinde versehen ist, in die der Gewindebolzen des Kopfstückes eingreift oder durch die eine zusätzliche Spannschraube hindurchgreift.

An der Ringschulter können zum Ansetzen eines Greifwerkzeuges für die Montage entweder ein Innensechskant oder radial gegenüberliegende abgeflachte Seitenflächen am Umfang der Ringschulter vorgesehen werden.

Ausführungsbeispiele der Erfindung sind in der Zeichnung dargestellt.

Es zeigen:

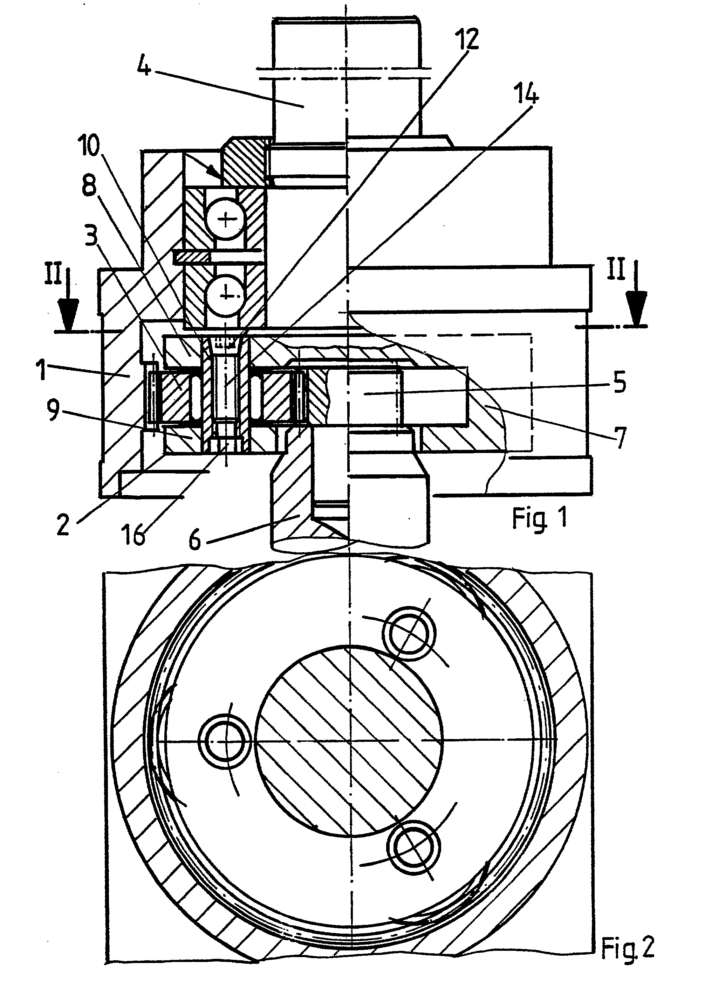

Fig. 1 ein Planetengetriebe mit einem Planetenradbolzen in einem Umlaufträger halb im Schnitt, halb in Ansicht,

Fig. 2 einen Schnitt durch ds Planetengetriebe nach Linie II–II

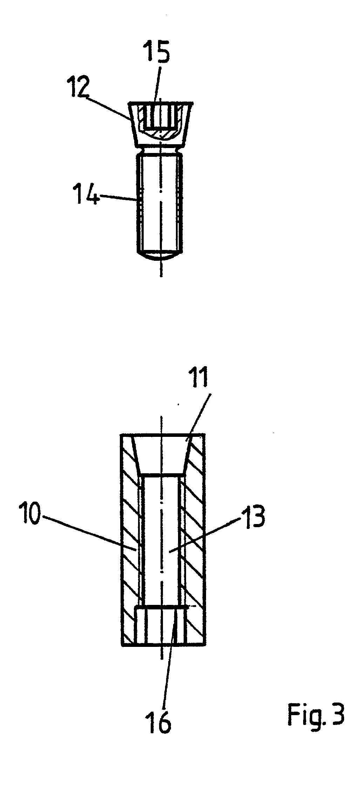

Fig. 3 einen Planetenradbolzen für zweiseitige Lagerung im Schnitt mit zugehörigem Kopfstück in Ansicht

Fig. 4 einen Planetenradbolzen für einseitige Lagerung im Schnitt mit zugehörigem Kopfstück und Ringschulter jeweils in Ansicht

Fig. 5 eine Ansicht der Ringschulter-Schraube nach Linie V–V

In dem Gehäuse 1 eines Planetenradgetriebes ist ein Umlaufträger 2 zur Aufnahme der Planetenräder 3 an eine in diesem Gehäuse drehbar gelagerte erste Welle 4 angeformt. Die Planetenräder 3 stehen mit einem in Achsrichtung der ersten Welle 4 angeordneten Ritzel 5 in Berührung, das mit einer weiteren in dem Gehäuse 1 drehbar gelagerten zweiten Welle 6 starr verbunden ist. Die Wellen 4 und 6 können jede entweder An- oder Abtriebswelle des Planetengetriebes sein. Der Umlaufträger 2 besteht aus zwei axial in Abstand angeordneten mit Streben 7 miteinander verbundenen Flanschen 8,9. Die Flansche 8,9 enthalten die Aufnahmebohrungen für die Planetenradbolzen 10. Die Planetenradbolzen 10 sind jeweils an einem Ende in Aufnahmebohrungen des Flansches 8 des Umlaufträgers 2 durch radiale Verspannung fixiert. Die radiale Verspannung wird durch eine ringförmige Ausbildung des betreffenden Endes des Planetenradbolzens 10 ermöglicht,indem die von dem Inneren des Ringabschnitts gebildete Öffnung 11 sich nach axial außen konisch erweitert und ein Kopfstück 12 mit einer Gegenkonusaußenfläche aufnehmen kann. Der Planetenradbolzen 10 weist im übrigen eine axial durchgehende Bohrung 13 auf, in die ein Gewinde eingebracht ist. Das einen Gewindebolzen 14 aufweisende Kopfstück 12 wird in das Gewinde der Bohrung 13 eingeschraubt. Die beiden ineinanderliegenden Konusflächen des Planetenradbolzens einerseits und des Kopfstückes 12 andererseits bewirken bei ausreichender gegenseitiger Verspannung eine radiale Aufweitung des betreffenden Planetenradbolzen 10 -Endbereiches, die eine sichere Fixierung des Planetenradbolzens in der Aufnahmebohrund des betreffenden Umlaufträgerflansches 8 gewärleistet.

Um das Kopfstück 12 und den Planetenradbolzen 10 gegeneinander verspannen zu können, sind sowohl an dem Kopfstück 12 als auch an dem Planetenradbolzen 10 Innensechskante 15 und 16 angebracht.

Das radiale Verspannen des Planetenradbolzens 10 muß in den Aufnahmebohrungen des Flansches 8 erfolgen,da dessen Anbindung an die Welle 4 gegenüber derjenigen des Flansches 9 die höhere Festigkeit aufweist.Denn ein in einer Bohrung gelagerter Bolzen neigt stets dazu,in die Richtung zu wandern, in der sich die Bohrung durch Radiallast auf den Bolzen aufweitet (Prinzip der Pfahllockerung).Bei dem Flansch 8 ist die Tendenz zu einer Aufweitung insoweit größer als bei dem Flansch 9,der nur durch die Streben 7 angebunden ist und daher unter von den Planetenrädern 3 auf den Planetenradbolzen 10 einwirkenden Radialkräften insgesamt stärker nachgeben kann als der direkt an die Welle 4 angeformte Flansch 8.

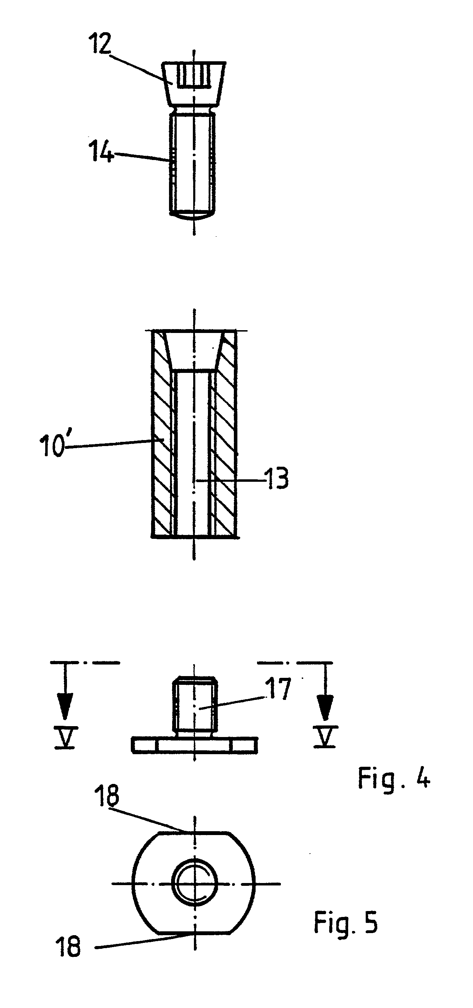

Einen speziell nur für einseitige Lagerung bestimmtem Planetenradbolzen 10 zeigt Fig.4.Das einzubringende Kopfstück 12 mit dem daran befindlichen Gewindebolzen 14 entspricht demjenigen des zweiseitig gelagerten Planetenradbolzens 10.Damit das Planetenrad 3 auch an dem freien Ende des Planetenradbolzens 10'axial festgelegt ist, kann an dieses freie Ende eine Ringschulterschraube 17 in das Gewinde der Bohrung 13 eingeschraubt werden.Um ein Greifwerkzeug an diese Ringschulterschraube 17 ansetzen zu können,besitzt diese an ihrem Außenumfang zwei abgeflachte gegenüberliegende ebene Flächen 18.

Mit den erfindungsgemäßen Planetenradbolzen ist erstmals auf besonders einfache Weise eine sichere sowie leicht mon- und demontierbare Lagerung der Planetenradbolzen realisiert.Dabei ist von besonderem Vorteil,daß die Montagearbeiten ohne Komplizierte Werkzeuge erfolgen können.Günstig ist ferner,daß in den Umlaufträger selbst keine zur Sicherung der Planetenradbolzen beweglichen Teile,wie z.B. Schrauben,eingebracht werden müssen.Dadurch wird von vornherein die Gefahr sich durch ein solches Einbringen von beweglichen Sicherungselementen ergebender konstruktiver Schwachstellen innerhalb des Umlaufträgers gänzlich ausgeschaltet.

Desweiteren ist mit der erfindungsgemäßen Lösung eine minimale axiale Bauweise der Einheit aus Umlaufträger und Planetenradbolzen gegeben,wie sie sonst nur bei einer Schrumpfverbindung,die jedoch wiederum die eingangs genannten Nachteile aufweist,erreichbar ist.

## Patentansprüche

1. In den Umlaufträger eines Planetengetriebes einsetzbarer Planetenradbolzen, gekennzeichnet durch die Merkmale

a) der Planetenradbolzen (10) ist an einem Ende mit einer rotationssymmetrisch in Bolzenachse liegenden sich konisch nach außen erweiternden Öffnung (11) versehen,

b) in die Öffnung (11) ist ein mit einem Gegenkonus versehenes Kopfstück (12) unter Aufweitung zumindest eines Teils des den konischen Bereich der Öffnung (11) umschließenden Umfangs des Planetenradbolzens (10) einbringbar,

c) das in die Öffnung (11) zu führende Ende des Kopfstückes (12) ist mit einem Gewindebolzen (14) versehen,

d) der Gewindebolzen (14) des Kopfstückes (12) ist in eine sich an die konische Öffnung (11) des Planetenradbolzens (10) anschließende Gewinde-Bohrung (13) einschraubbar,

e) das Kopfstück (12) ist an seiner axial außerhalb des Planetenbolzens (10) zu liegen kommenden Stirnfläche mit einem Innensechskant ausgerüstet.

2. Planetenradbolzen nach Anspruch 1, dadurch gekennzeichnet, daß der Planetenradbolzen (10) an seinem der konischen Öffnung entgegengesetzten Ende einen Innensechskant aufweist.

3. Planetenradbolzen nach einem der vorhergehenden Ansprüche, dadurch gekennzeichnet, daß dieser eine axial durchgehende Bohrung (13) aufweist.

4. Planetenradbolzen nach einem der vorhergehenden Ansprüche, dadurch gekennzeichnet, daß bei dessen beidseitiger Lagerung dessen aufgeweiteter Endbereich in denjenigen Teil des Umlaufträgers (2) eingesetzt ist, der auf derjenigen Seite des gelagerten Planetenrades (3) liegt, an der der Umlaufträger (2) mit der diesen tragenden Welle (4) verbunden ist.

5. Planetenradbolzen nach einem der Ansprüche 1 bis 4, dadurch gekennzeichnet, daß bei nur einseitiger Lagerung des Planetenradbolzens (10') an dessen freiem Ende eine den Planetenbolzen-Außenumfang axial begrenzende Ringschulter angebracht ist.

6. Planetenradbolzen nach Anspruch 5, dadurch gekennzeichnet, daß die Ringschulter anschraubbar ist.

7. Planetenradbolzen nach Anspruch 5 oder 6, dadurch gekennzeichnet, daß die Ringschulter der Kopf einer in den Planetenradbolzen (10') einschraubbaren Schraube (17) ist.

8. Planetenradbolzen nach einem der Ansprüche 5 bis 7, dadurch gekennzeichnet, daß die Gewinde-Bohrung (13) für den Gewindebolzen (14) des konischen Kopfstückes (12) gleichzeitig auch die an die Ringschulter angreifende oder mit dieser verbundene Schraube (17) aufnimmt.

9. Planetenradbolzen nach einem der Ansprüche 5 bis 8, dadurch gekennzeichnet, daß das die Ringschulter an dem Planetenradbolzen (10') bildende Teil bzw. die Ringschulter selbst, wenn diese mit dem sie an dem Planetenradbolzen (10') fixierenden Teil fest verbunden ist, mit Ansatzflächen (18) für ein Greifwerkzeug versehen ist.

## Claims

1. Planet wheel pin capable of being inserted into the revolving support of an epicyclic gear, characterized by the features

a) the planet wheel pin (10) is provided, at one end, with a conically outwardly diverging opening (1), lying rotationally symmetrically in the pin axis,

b) a head-piece (12), provided with a complementary cone, can be introduced into the opening (11), expanding at least a part of the periphery of the planet wheel pin (10) surrounding the conical region of the opening (11),

c) the end of the head-piece (12) to be introduced into the opening (11) is provided with a threaded pin (14),

d) the threaded pin (14) of the head-piece (12) can be screwed into a threaded bore (13) adjoining the conical opening (11) of the planet wheel pin (10).

e) the head-piece (12) is equipped, at its end face which will be axially outside the planet wheel pin (10), with a hexagonal socket.

2. Planet wheel pin accoding to Claim 1, characterized in that the planet wheel pin (10) possesses, at its end remote from the conical opening, a hexagonal socket.

3. Planet wheel pin according to one of the preceding Claims, characterized in that it possesses an axial through bore (13).

4. Planet wheel pin according to one of the preceding Claims, characterized in that, where it is mounted at both ends, its expanded end zone is located in that part of the revolving support (2) which is situated at that end of the mounted planet wheel pin (3), at which the revolving support (2) is connected with the shaft (4) carrying it.

5. Planet wheel pin according to one of Claims 1 to 4, characterized in that, where the planet wheel pin (10') is mounted at only one end, an annular shoulder axially bounding the external periphery of the planet wheel pin is mounted on its free end.

6. Planet wheel pin according to Claim 5, characterized in that the annular shoulder can be screwed on.

7. Planet wheel pin according to Claim 5 or 6, characterized in that the annular shoulder is the head of a screw (17) which cann be screwed into the planet wheel pin (10').

8. Planet wheel pin according to one of Claims 5 to 7, characterized in that the threaded bore (13) for the threaded pin (14) of the conical head-piece (12) simultaneously seats also the screw (17) acting on the annular shoulder or connected with it.

9. Planet wheel pin according to one of Claims 5 to 8, characterized in that the part forming the annular shoulder on the planet wheel pin (10'), or the annular shoulder itself when the latter is firmly connected to the part fixing it to the planet wheel pin (10'), is provided with receiving surfaces (18) for a gripping tool.

**Revendications**

1. Axe de pignon satellite pouvant être monté dans la cage de transmission d'un train planétaire, caractérisé par les particularités suivantes:
  a) cet axe (10) de pignon satellite comporte à une extrémité une ouverture (11) à symétrie de rotation, disposée dans son axe géométrique et s'évasant en cône vers l'extérieur;
  b) un organe (12) à tête présentant une conicité complémentaire, peut être introduit dans cette ouverture (11) en élargissant au moins une partie de la région périphérique de l'axe (10) qui entoure la zone conique de ladite ouverture (11);
  c) l'extrémité de l'organe (12) à tête, destinée à être introduite dans l'ouverture (11), comporte une queue filetée (14);
  d) cette queue filetée (14) de l'organe (12) à tête peut être vissée dans un taraudage (13) qui fait suite à l'ouverture conique (11) de l'axe (10);
  e) l'organe (12) à tête comporte un logement hexagonal dans sa face d'extrémité destinée à se trouver axialement à l'extérieur de l'axe (10).

2. Axe de pignon satellite selon la revendication 1, caractérisé en ce qu'il (10) comporte un logement hexagonal à son extrémité opposée à l'ouverture conique.

3. Axe de pignon satellit selon l'une des revendications précédentes, caractérisé en ce qu'il comporte un alésage axial (13) qui le traverse complètement.

4. Axe de pignon satellit selon l'une des revendications précédentes, caractérisé en ce que, s'il est maintenu à ses deux extrémités, son extrémité élargie est insérée dans celui des éléments de la cage de transmission (2) qui se trouve du côté du pignon satellite (3) où cette cage (2) est reliée à l'arbre (4) qui la porte.

5. Axe de pignon satellite selon l'une des revendications 1 à 4, caractérisé en ce que, si cet axe (10') n'est maintenu que d'un côté, un épaulement annulaire, qui limite axialement la périphérie dudit axe, est monté à l'extrémité libre de ce dernier.

6. Axe de pignon satellite selon la revendication 5, caractérisé en ce que l'épaulement annulaire peut être vissé.

7. Axe de pignon satellite selon la revendication 5 ou 6, caractérisé en ce que l'épaulement annulaire est la tête d'une vis (17) qui peut être vissée dans cet axe (10').

8. Axe de pignon satellite selon l'une des revendications 5 à 7, caractérisé en ce que le taraudage (13) destiné à la queue filetée (14) de l'organe (12) à tête conique loge aussi la vis (17), qui est en prise avec l'épaulement annulaire ou qui est solidaire de cet épaulement.

9. Axe de pignon satellite selon l'une des revendications 5 à 8, caractérisé en ce que l'organe qui forme l'épaulement annulaire sur cet axe (10'), ou bien cet épaulement annulaire lui-même, s'il est solidaire de l'organe qui le fixe audit axe (10'), comporte des surfaces de contact (18) pour un outil de préhension.

Fig. 1

Fig. 2

Fig. 3

Fig. 4

Fig. 5